# EUROPÄISCHE PATENTSCHRIFT

(11) **EP 2 878 489 B1**
(45) Veröffentlichungstag und Bekanntmachung des Hinweises auf die Patenterteilung: **03.01.2018**
(21) Anmeldenummer: 14187788.6
(22) Anmeldetag: 06.10.2014
(51) Int. Cl.: B60R 5/04

(54) **LADEBODEN FÜR EIN FAHRZEUG**
LOADING PLATFORM FOR A VEHICLE
PLANCHER DE CHARGEMENT D'UN VÉHICULE

(30) Priorität: 28.11.2013 DE 102013224467
(43) Veröffentlichungstag der Anmeldung: 03.06.2015
(73) Patentinhaber: Volkswagen Aktiengesellschaft, 38440 Wolfsburg (DE)
(72) Erfinder: Gaas, Matthias, 38442 Wolfsburg (DE)

(56) Entgegenhaltungen:
- EP-A1- 2 226 219
- DE-A1- 19 802 077
- JP-A- S6 175 035
- JP-A- 2007 203 977
- US-A1- 2012 261 935

## Beschreibung

Die Erfindung betrifft ein Fahrzeug, insbesondere ein Kraftfahrzeug, mit einem Ladeboden. Der Ladeboden umfasst einen ersten Abschnitt und zumindest einen zweiten Abschnitt, der in Fahrtrichtung hinter dem ersten Abschnitt angeordnet ist, wobei der zweite Abschnitt gelenkig und um eine Achse schwenkbar mit dem ersten Abschnitt verbunden ist, und ein Verschlussglied, wobei zumindest ein Teil des Ladebodens über das Verschlussglied an dem Kraftfahrzeug lösbar festlegbar ist, und wobei der Ladeboden in einem entriegelten Zustand des Verschlussgliedes aus dem Kraftfahrzeug entnehmbar ist.

EP 2 226 219 A1 beschreibt ein Kraftfahrzeug mit einem Ladeboden, bei dem ein vorderer Abschnitt senkrecht in einer Führung angeordnet ist und ein heckseitig daran anschließender Abschnitt waagerecht angeordnet ist. Die Abschnitte des Ladebodens sind gelenkig miteinander verbunden, wobei der heckseitige Abschnitt bei einem Ablegen einen Verschluss betätigt, der mit dem vorderen Abschnitt zusammenwirkt.

DE 198 02 077 A1 beschreibt ein Kraftfahrzeug gemäss dem Oberbegriff des Anspruchs 1 mit einer Kofferraumabdeckung, bei der ein manuell betätigbarer Verschluss an einer Querkante eines hintersten von mehreren aufeinander klappbaren Abschnitten angeordnet ist.

Es ist die Aufgabe der Erfindung, ein Fahrzeug, insbesondere ein Kraftfahrzeug, mit einem entnehmbaren Ladeboden anzugeben, der einfach bedienbar ist.

Diese und andere Aufgaben werden für ein eingangs genanntes Fahrzeug erfindungsgemäß gelöst durch einen Ladeboden, umfassend
einen ersten Abschnitt und
zumindest einen zweiten Abschnitt, der in Fahrtrichtung des Fahrzeugs hinter dem ersten Abschnitt angeordnet ist,
wobei der zweite Abschnitt gelenkig und um eine Achse schwenkbar mit dem ersten Abschnitt verbunden ist, und
ein Verschlussglied, wobei zumindest ein Teil des Ladebodens über das Verschlussglied an dem Fahrzeug lösbar festlegbar ist,
wobei der Ladeboden in einem entriegelten Zustand des Verschlussgliedes aus dem Fahrzeug entnehmbar ist,
wobei der erste Abschnitt und der zweite Abschnitt in dem festgelegten Zustand in derselben Ebene angeordnet sind, und
wobei der erste Abschnitt des Ladebodens über das Verschlussglied verriegelbar ist.

Durch die Anordnung der Abschnitte in derselben Ebene kann das Verschlussglied näher an einem heckseitigen Zugang des Fahrzeugs angeordnet sein, was die Erreichbarkeit des Verschlussgliedes und dessen Bedienung vereinfacht.

Die Verriegelung des ersten Abschnitts über das Verschlussglied ermöglicht einen einfachen Entnahmevorgang. In bevorzugter Detailgestaltung kann der zweite Abschnitt, der in Fahrtrichtung hinter dem ersten Abschnitt angeordnet ist, ohne das Lösen eines Verschlussgliedes angehoben und/oder umgeklappt werden. Besonders bevorzugt kann durch das Lösen des Verschlussgliedes ein zuvor aufeinander geklappter, kompakter Stapel von Abschnitten des Ladebodens von dem Fahrzeug gelöst werden.

Unter einem Ladeboden mit mehreren Abschnitten wird eine aus dem Fahrzeug entnehmbare, flächige Abdeckung verstanden, die zumeist in einem heckseitigen Ablagebereich ("Laderaum", "Kofferraum") angeordnet ist. Zumindest zwei Abschnitte sind gelenkig miteinander verbunden. Auf einfache Weise kann dies etwa durch einen durchgängigen, ausreichend biegbaren Bodenbelag erfolgen, unter dem zumindest zwei versteifende Bereiche angeordnet sind, zwischen denen der Bodenbelag nach Art eines Filmscharniers wirkt. Bevorzugt kann dabei der eine Abschnitt um 180° auf den anderen Abschnitt umgeklappt werden. Es können allgemein weitere Abschnitte vorgesehen sein, die ebenfalls umklappbar sind. Zum Beispiel können drei Abschnitte vorliegen, die nach Art einer Z-Faltung aufeinander klappbar sind.

In dem aufeinander geklappten Zustand liegt ein definierter Zwischenzustand des Ladebodens vor, in dem das Paket von Ladebodenabschnitten einfach aus dem Fahrzeug entnommen werden kann. Alternativ zu einer Entnahme kann aber auch eine Beladung bzw. ein regulärer Fahrzeugbetrieb in dem Zwischenzustand erfolgen, etwa um einen unter dem Ladeboden befindlichen Fahrzeugbereich für die Beladung zu nutzen, ohne den Ladeboden vollständig zu entfernen.

Unter einem Verschlussglied im Sinne der Erfindung wird jedes Mittel verstanden, durch das der Ladeboden lösbar an dem Fahrzeug festlegbar ist, insbesondere mittels formschlüssig wirkender Riegelmittel. Ein Verschlussglied im Sinne der Erfindung kann insbesondere von einer Bedienperson von einem verriegelten Zustand in einen entriegelten Zustand überführt werden. Bevorzugt liegt in dem verriegelten Zustand eine formschlüssige Verbindung des Ladebodens mit dem Fahrzeug durch das Riegelmittel vor, wobei der Formschluss wenigstens in einer Hochrichtung des Fahrzeugs, bevorzugt aber in sämtlichen Raumrichtungen wirkt.

Haftend wirkende Haltehilfen wie etwa Klettstreifen, Klebestreifen oder Ähnliches sind kein Verschlussglied im Sinne der Erfindung, können aber je nach Bedarf zusätzlich vorgesehen sein.

Die Ebene, in der die Ladebodenabschnitte gemeinsam angeordnet sind, hat bevorzugt eine im Wesentlichen waagerechte Orientierung. Sie kann aber auch eine leichte Neigung gegen die Waagerechte aufweisen. Die Abschnitte des Ladebodens müssen nicht in einem geometrisch strengen Sinn in derselben Ebene angeordnet sein, sondern können je nach Ausformung des Fahrzeughecks auch einen kleinen Winkel zueinander aufweisen. Bevorzugt beträgt ein solcher Winkel nicht mehr als 20 Grad, besonders bevorzugt nicht mehr als 10 Grad.

Im Interesse einer sicheren Festlegung ist in einer bevorzugten Ausführungsform jeweils ein Verschlussglied an jeder Seite des Ladebodens vorgesehen. Unter einer Seite des Ladebodens wird dabei jeweils eine äußere Begrenzung des Ladebodens in Querrichtung des Fahrzeugs verstanden. Ein Ladeboden gemäß einer solchen Ausführungsform umfasst daher zumindest ein linksseitiges und ein rechtsseitiges Verschlussglied.

Bei einer bevorzugten Weiterbildung der Erfindung ist der erste Abschnitt in eine abgelegte Position verbringbar oder aus dieser Position entnehmbar, während zumindest der zweite Abschnitt in einer umgeklappten Position auf dem ersten Abschnitt aufliegt. Dies ermöglicht eine besonders einfache Entnahme und eröffnet weitere Möglichkeiten einer Beladung in diesem Zwischenzustand.

Allgemein vorteilhaft ist an dem zweiten Abschnitt ein mit dem Verschlussglied zusammenwirkendes Koppelglied angeordnet. Das Koppelglied kann auf einfache Weise als ein bewegtes Betätigungselement für das Verschlussglied wirken, während der hintere Ladebodenabschnitt in seine reguläre Position geklappt wird. Hierdurch erübrigt sich insbesondere ein separater Schritt der Verriegelung des Verschlussgliedes durch die Bedienperson. Bevorzugt ragt dabei das Koppelglied über eine ebene Oberfläche des zweiten Abschnitts vor.

Bei einer bevorzugten Ausführungsform der Erfindung umfasst das Verschlussglied ein linear verschiebbares Riegelglied. Solche Riegelglieder sind mechanisch robust, kostengünstig herstellbar und einfach bedienbar. In besonders bevorzugter Weiterbildung umfasst das Verschlussglied dabei keine Teile, die um eine Achse verschwenkbar sind.

Eine erleichterte Bedienung des Riegelgliedes wird dadurch erzielt, dass das Riegelglied einen Ansatz zum manuellen Verschieben des Riegelgliedes durch eine Bedienperson aufweist. Ein solcher Ansatz kann zum Beispiel als Vertiefung, als Vorsprung oder als definiert ausgeformter, zum Beispiel gerillter Bereich einer Oberfläche ausgebildet sein. Besonders vorteilhaft ist dabei der Ansatz nur dann sichtbar oder für die Bedienperson erreichbar, wenn der hintere Ladebodenabschnitt aus seiner Ablageposition hochgeschwenkt ist.

Zur einfachen Realisierung eines erfindungsgemäßen Verschlussgliedes hat das Riegelglied in Weiterbildung der Erfindung einen Halteabschnitt, der in dem festgelegten Zustand mit einem der Abschnitte des Ladebodens kämmt. Es kann sich dabei um eine hakenartige Ausformung oder ähnliche Gestaltungen handeln. Der Halteabschnitt kann in einfacher Weise zum Beispiel in eine Ausnehmung an einem seitlichen Rand eines Ladebodenabschnitts eingreifen. Der Ladebodenabschnitt kann hierzu an seinem Rand ein Profilteil aufweisen, zum Beispiel aus Metall oder Kunststoff. Das Profilteil kann dabei zugleich eine versteifende, den Rand abschließende sowie die Verriegelung ermöglichende Funktion für den Ladebodenabschnitt bewirken.

Bei einer vorteilhaften Weiterbildung der Erfindung kann das Riegelglied in zumindest einer Endposition mittels einer Rastkraft gehalten sein. Dies bietet eine haptische Verbesserung und stellt zumindest in einem aufgeklappten Zwischenzustand des Ladebodens sicher, dass der Ladeboden auch unter mechanischen Einflüssen auf das Riegelglied, insbesondere während der Fahrt, verriegelt bleibt. Aus denselben Gründen kann alternativ oder ergänzend vorgesehen sein, dass das Riegelglied in einer Richtung mittels einer Feder kraftbeaufschlagt ist.

Allgemein vorteilhaft liegt der Ladeboden auf zumindest einem karosseriefesten Rahmenteil auf, wobei das Riegelglied in dem Rahmenteil aufgenommen ist. Hierdurch lässt sich der Ladeboden einfach und platzsparend in das Fahrzeug einbauen und seine Aufnahme mit geringem Aufwand an verschiedene Fahrzeuge anpassen. Insbesondere können dabei wesentliche Elemente des Verschlussgliedes als Gleichteile ausgebildet sein. Die Rahmenteile können lösbar oder dauerhaft mit der Karosserie des Fahrzeugs verbunden sein.

Ganz allgemein versteht sich, dass ein erfindungsgemäßer Ladeboden regelmäßig, aber nicht notwendig, zwei der Verschlussglieder aufweist, wobei jedes der Verschlussglieder an einem bezüglich der Fahrtrichtung linken oder rechten Rand des Ladebodens angeordnet ist.

Besonders vorteilhaft ist der Ladeboden so ausgebildet, dass der Ladeboden mittels nur einer Hand einer Bedienperson von dem festgelegten Zustand ausgehend entriegelbar und aus dem Fahrzeug entnehmbar ist. Hierunter wird verstanden, dass die Bedienperson dabei keine weiteren stützenden oder haltenden Bewegungsabläufe mit einem Ellenbogen, der anderen Hand oder anderen Hilfen vornehmen muss.

Bei einem bevorzugten Ausführungsbeispiel eines Fahrzeugs mit einem erfindungsgemäßen Ladeboden mit drei Abschnitten ist dabei der Ablauf des Entnehmens wie folgt:
Ein hinterster, dritter Abschnitt des Ladebodens wird mit der einen Hand aufgenommen. Der dritte Abschnitt wird mit dem zweiten Abschnitt Z-förmig - in sogenannter Z-Faltung - auf den ersten Abschnitt geklappt, so dass der zweite Abschnitt um 180 Grad umgekehrt zu liegen kommt. Dies ergibt einen verriegelten Zwischenzustand des Ladebodens.

Jeweils ein linkes und ein rechtes Riegelglied wird mit der Hand nacheinander zurückgezogen, um den bisher verriegelten ersten Abschnitt freizugeben.

Der Z-förmig gestapelte Ladeboden wird aus dem Heckbereich des Fahrzeugs mit einer Hand entnommen.

Das Einsetzen des Ladebodens in das Fahrzeug läuft bevorzugt wie folgt ab:
Der Z-förmige gestapelte Ladeboden wird mit einer Hand in den Heckbereich eingelegt, wobei der vordere, erste Abschnitt mit seiner Vorderkante an einem Anschlag definiert anliegt.
Der dritte und der zweite Abschnitt werden mit einer Hand ausgeklappt. Dabei wird durch den zweiten Abschnitt das Verschlussglied betätigt und der Ladeboden wird automatisch verriegelt.

Falls der Ladeboden nach seinem Einlegen in dem Zwischenzustand verbleiben soll, so ist eine Verriegelung in dieser Stellung zu empfehlen. Hierzu können die Verschlussglieder manuell mit dem vorderen Abschnitt verriegelt werden, ohne dass die Abschnitte zwei und drei ausgeklappt werden müssen.

Weitere Vorteile und Merkmale der Erfindung ergeben sich aus dem nachfolgend beschriebenen Ausführungsbeispiel sowie aus den abhängigen Ansprüchen.

Nachfolgend wird ein bevorzugtes Ausführungsbeispiel der Erfindung beschrieben und anhand der anliegenden Zeichnungen näher erläutert.
- Fig. 1: zeigt eine seitliche Draufsicht auf einen erfindungsgemäßen Ladeboden für ein Fahrzeug in einem abgelegten und verriegelten Zustand.
- Fig. 2: zeigt den Ladeboden aus Fig. 1 in einem verriegelten Zwischenzustand.
- Fig. 3: zeigt eine schematische seitliche Ansicht eines Verschlussgliedes des Ladebodens aus Fig. 1 in einem verriegelten Zustand.
- Fig. 4: zeigt das Verschlussglied aus Fig. 3 in einem entriegelten Zustand.
- Fig. 5: zeigt eine räumliche Detailansicht des Ladebodens aus Fig. 2.
- Fig. 6: zeigt die Detailansicht aus Fig. 5 aus einer anderen räumlichen Perspektive.
- Fig. 7: zeigt eine seitliche Draufsicht auf den Ladeboden aus Fig. 1 während einer Schwenkbewegung im Zuge der Ablage des Ladebodens.
- Fig. 8: zeigt eine räumliche Detailansicht des Ladebodens aus Fig. 7.
- Fig. 9: zeigt die Detailansicht aus Fig. 8 aus einer anderen räumlichen Perspektive.

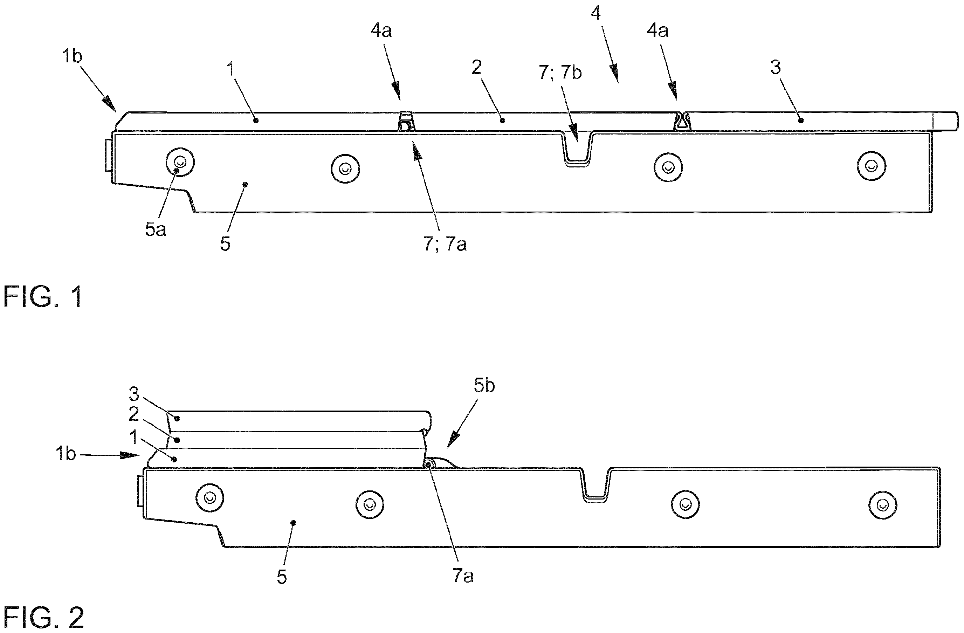

Der in Fig. 1 gezeigte Ladeboden ist in einem heckseitigen Ladebereich eines Personenkraftwagens (nicht dargestellt) angeordnet. Dabei kann es sich um ein Kraftfahrzeug mit Stufenheck, Schrägheck oder einer sonstigen Karosserieform handeln.

Der Ladeboden umfasst einen ersten, vorliegend in Fahrrichtung vorderen Abschnitt 1, einen zweiten, in Fahrtrichtung dahinter angeordneten Abschnitt 2 und einen dritten, in Fahrtrichtung hintersten Abschnitt 3. Die drei Abschnitte 1, 2, 3 sind jeweils als flächige, in sich biegesteife Elemente ausgebildet. Sie befinden sich im abgelegten Zustand des Ladebodens (Fig. 1) sämtliche in derselben Ebene, wobei die Ebene im Wesentlichen waagerecht orientiert ist.

In diesem Zustand bildet der Ladeboden den Boden des Ladebereichs des Kraftfahrzeugs aus, so dass Gepäckstücke auf ihm abgestellt werden können.

Die Abschnitte 1, 2, 3 liegen mit ihren seitlichen Rändern auf jeweils einem linken und einem rechten Rahmenteil 5 auf. Das Rahmenteil 5 ist über Befestigungspunkte 5a dauerhaft ortsfest an der Karosserie des Fahrzeugs angebracht. Die Befestigung der Rahmenteile 5 an der Karosserie kann nach einem beliebigen Verfahren erfolgen. Bei einer alternativen Ausführungsform können die Rahmenteile 5 auch materialeinheitlich einstückig mit der übrigen Karosserie ausgeformt sein.

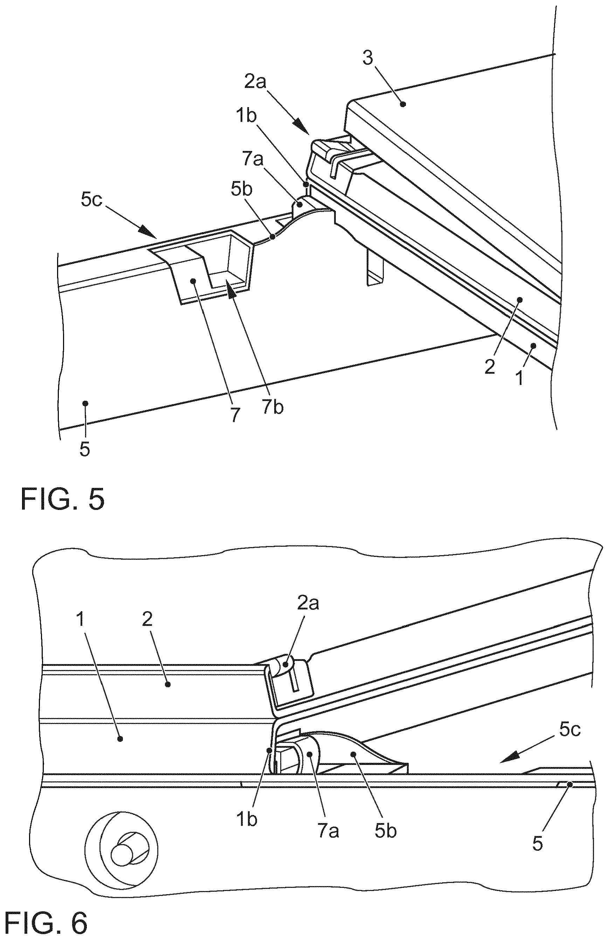

Zur Verbesserung einer Positionierung und Halterung des vorderen Abschnitts 1 hat dieser eine Abschrägung 1c an seiner Vorderkante, die mit einem entsprechend geformten Anschlag (nicht dargestellt) an dem Fahrzeug zusammenwirkt. Ferner ist an dem Rahmenteil 5 eine Führung 5b ausgeformt, die den ersten Abschnitt gegen ein Verrutschen nach hinten sichert. Dabei kann der erste Abschnitt 1 über das Rahmenteil 5 nach vorne geschoben werden, bis seine hintere Kante über die Führung 5b fällt (siehe Fig. 5). Die Abschrägung 1c und die Führung 5b bewirken allerdings keine vollständige Halterung des Ladebodens, und insbesondere keine Sicherung gegen Beschleunigungen in senkrechter Richtung.

Ein biegsamer Bodenbelag 4 erstreckt sich über sämtliche Abschnitte 1, 2, 3. An den Grenzen zwischen zwei Abschnitten bildet der Bodenbelag 4 jeweils ein Filmscharnier 4a, 4b aus.

Die Abschnitte können über die Filmscharniere 4a, 4b um quer zu der Fahrtrichtung erstreckte Achsen zueinander verschwenkt werden. Auf diese Weise kann der zweite Abschnitt 2 um 180° umgekehrt, also mit seiner Oberseite nach unten, auf dem ersten Abschnitt 1 abgelegt werden. Der dritte Abschnitt 3, der im Sinne der Erfindung optional ist, kommt in seiner ursprünglichen Orientierung auf dem zweiten Abschnitt 2 zu liegen. Auf diese Weise wird insgesamt ein Zwischenzustand (siehe Fig. 2) erreicht, in dem auch ein Raum unterhalb des Ladebodens zugängig ist, und in dem der Ladeboden ebenso wie im abgelegten Zustand ortsfest gehalten ist. Dies ermöglicht einen Betrieb des Fahrzeugs, ohne dass der Ladeboden sich unkontrolliert im Ladebereich bewegen kann.

Der Ladeboden ist hierzu sowohl im abgelegten Zustand nach Fig. 1 als auch im Zwischenzustand nach Fig. 2 lösbar mit den karosseriefesten Rahmenteilen 5 verriegelt. Dies wird durch ein Verschlussglied 6 erreicht. Das Verschlussglied 6 ist im Bereich des Übergangs vom ersten Abschnitt 1 zum zweiten Abschnitt 2 angeordnet, so dass es gut von einem heckseitigen Zugang des Fahrzeugs durch eine Bedienperson erreichbar ist. Vorliegend ist jeweils ein Verschlussglied in symmetrischer Ausbildung an jeder Seite des Ladebodens vorgesehen, so dass insgesamt ein Paar von zwei Verschlussgliedern vorliegt. Nachfolgend wird nur eines der beiden Verschlussglieder im Detail beschrieben.

Es versteht sich, dass das Verschlussglied bei anderen Ausführungsformen der Erfindung auch an einer anderen Position der mehreren Abschnitte des Ladebodens angeordnet sein kann.

Im Sinne der Erfindung wirkt das Verschlussglied mit einem Abschnitt des Ladebodens zusammen, an den sich heckseitig bzw. entgegen der Fahrtrichtung ein weiterer Abschnitt des vollständig auseinander geklappten Ladebodens anschließt. Der mit dem Verschlussglied zusammenwirkende, erste Abschnitt kann wie im vorliegenden Beispiel ein vorderster Abschnitt des Ladebodens sein. Bei hierzu alternativen Ausführungsformen der Erfindung kann aber auch in Fahrtrichtung ein weiterer Abschnitt vor dem ersten Abschnitt vorgesehen sein.

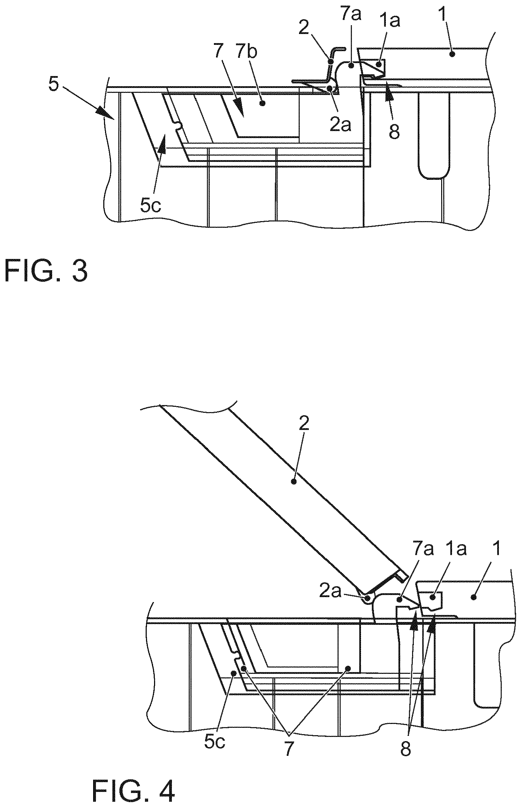

Das Verschlussglied 6 umfasst ein Riegelglied 7, das in einer führenden Aufnahme 5c an dem Rahmenteil 5 angeordnet und linear beweglich in diesem geführt ist. Das Riegelglied 7 kann in einer erste, in Fahrtrichtung vordere Position verschoben sein (siehe Fig. 3, Fig. 5, Fig. 6), in der der Ladeboden an dem Fahrzeug verriegelt ist. In einer zweiten, hinteren Position (siehe Fig. 4) des Riegelglieds ist der Ladeboden zur Entnahme aus dem Fahrzeug freigegeben.

Dies wird jeweils dadurch erreicht, dass das Riegelglied 7 einen hakenförmigen Halteabschnitt 7a aufweist. Der Halteabschnitt 7a ragt über eine Auflagefläche des Rahmenteils 5 nach oben vor. Je nach Position des Riegelglieds 7 greift der Halteabschnitt 7a entweder in einen seitlichen, profilierten Rand 1b des vorderen Abschnitts 1 ein oder nicht. In dem Rand 1b des Abschnitts 1 ist eine entsprechende Aufnahme 1a zum Zusammenwirken mit dem Halteabschnitt 7a vorgesehen.

Vorliegend umfassen der Halteabschnitt 7a und die Aufnahme 1a Ausformungen 8, mittels denen eine federnde Verrastung des Riegelglieds in seiner verriegelten Position erzielt wird. Hierdurch wird das Riegelglied gegenüber Vibrationen und kleineren, beim Fahrbetrieb auftretenden Kräften durch eine Rastkraft in seiner verriegelten Position gehalten.

Das Riegelglied 7 umfasst zudem einen Ansatz 7b zum manuellen Bedienen durch eine Bedienperson. Der Ansatz 7b ist als einseitig offene Vertiefung ausgebildet, in die die Bedienperson mit einem Finger eingreifen kann, um das Riegelglied 7 zurückzuziehen oder vorzuschieben.

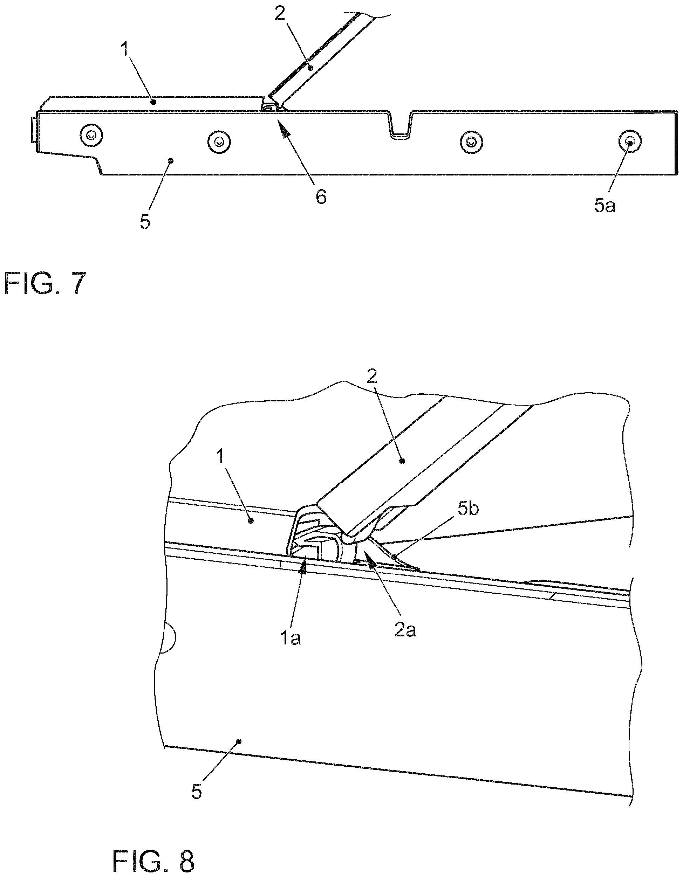

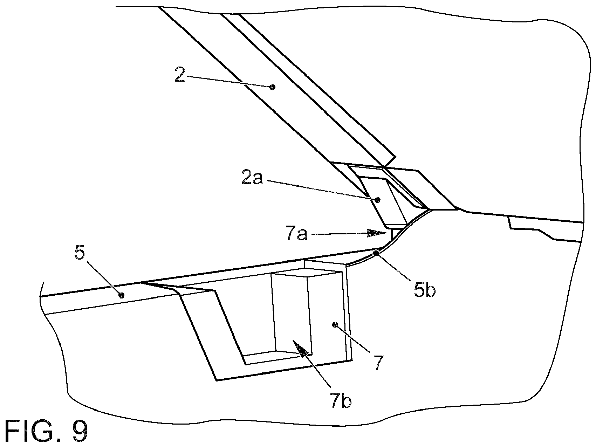

Neben einer solchen manuellen Betätigung erfolgt eine automatische Verriegelung des Verschlussglieds 6 durch das Ablegen des Ladebodens in dem Gepäckbereich, wenn der zweite Abschnitt 2 ausgeklappt wird. In Fig. 7 bis Fig. 9 ist eine halb verschwenkte Stellung des zweiten Abschnitts dargestellt, wobei das Riegelglied bereits teilweise, aber noch nicht vollständig in die verriegelte Position geschoben ist.

Zur automatischen Betätigung des Riegelglieds 7 ist an dem zweiten Abschnitt 2 ein Koppelglied 2a angeordnet. Das Koppelglied 2a hat die Form eines über die Oberfläche des zweiten Abschnitts vorragenden Nockens. Das Koppelglied 2a ist im Bereich einer vorderen Kante des zweiten Abschnitts angeordnet.

Im Zuge des Verschwenkens des zweiten Abschnitts 2 in die abgelegte Position schlägt zunächst das Koppelglied 2a an einer Rückseite des Halteabschnitts 7a des Riegelglieds 7 an (siehe etwa Fig. 4). Bei einem weiteren Verschwenken des zweiten Abschnitts 2 wird dann das Riegelglied 7 durch das Koppelglied 2a nach vorne verschoben (siehe Fig. 7 bis Fig.9), bis es zuletzt das Riegelglied 7 in die vordere Endposition geschoben hat.

Es wird angemerkt, dass in Fig. 3 und Fig. 4 der die Abschnitte 1, 2 verbindende Bodenbelag aus Gründen der Übersichtlichkeit nicht dargestellt ist. Die gezeigten Teile der Abschnitte 1, 2 sind jedoch jeweils so zueinander positioniert, als wenn Sie durch den Bodenbelag verbunden wären.

In der abgelegten Stellung bildet das Koppelglied 2a zudem eine weitere Sicherung gegen ein Zurückbewegen des Riegelglieds in eine geöffnete Stellung.

Das Ausführungsbeispiel der Erfindung funktioniert nun wie folgt:
Ausgehend von einem entnommenen Zustand des Ladebodens wird der Z-förmig gestapelte Ladeboden wird mit einer Hand in den Heckbereich eingelegt, wobei der vordere, erste Abschnitt 1 mit seiner Vorderkante an einem Anschlag definiert anliegt.

Sodann werden der dritte Abschnitt 3 und der zweite Abschnitt 2 mit einer Hand ausgeklappt. Dabei wird durch den zweiten Abschnitt 2 das Verschlussglied 6 betätigt, indem das Koppelglied 2a das Riegelglied 7 vorschiebt. Der Ladeboden wird hierdurch automatisch verriegelt.

Falls der Ladeboden nach seinem Einlegen in dem Z-förmig gestapelten Zwischenzustand verbleiben soll, so ist eine Verriegelung in dieser Stellung zu empfehlen. Hierzu können die Riegelglieder 7 manuell durch die Bedienperson verriegelt werden, ohne dass der zweite und der dritte Abschnitt 2, 3 ausgeklappt werden müssen.

Soll der Ladeboden entnommen werden, ist der Ablauf wie folgt:
Der hinterste dritte Abschnitt 3 des Ladebodens wird mit der einen Hand aufgenommen und wird mit dem zweiten Abschnitt 2 Z-förmig auf den ersten Abschnitt 1 geklappt, so dass der zweite Abschnitt 2 um 180 Grad umgekehrt zu liegen kommt. Dies führt zu dem verriegelten Zwischenzustand des Ladebodens.

Sodann werden die Riegelglieder 7 mit der einen Hand nacheinander zurückgezogen, um den bisher verriegelten ersten Abschnitt 1 freizugeben. Der Z-förmig gestapelte Ladeboden wird dann mit einer Hand aus dem Heckbereich des Fahrzeugs entnommen.

### Bezugszeichenliste

- 1: erster Abschnitt des Ladebodens
- 1a: Aufnahme
- 1b: profilierter Rand
- 1c: Vorderkante
- 2: zweiter Abschnitt des Ladebodens
- 2a: Koppelglied
- 3: dritter Abschnitt des Ladebodens
- 4: Bodenbelag
- 4a, 4b: Filmscharnier
- 5: Rahmenteil
- 5a: Befestigungspunkt
- 5b: Führung am Rahmenteil
- 5c: führende Aufnahme für Riegelglied
- 6: Verschlussglied
- 7: Riegelglied
- 7a: Halteabschnitt
- 7b: Ansatz zum manuellen Bedienen
- 8: Ausformungen zur Verrastung

## Patentansprüche

1. Fahrzeug mit einem Ladeboden, umfassend
einen ersten Ladeboden-Abschnitt (1) und
zumindest einen zweiten Ladeboden-Abschnitt (2), der in Fahrtrichtung des Fahrzeugs hinter dem ersten Abschnitt (1) angeordnet ist,
wobei der zweite Abschnitt (2) gelenkig und um eine Achse schwenkbar mit dem ersten Abschnitt (1) verbunden ist, sowie
ein Verschlussglied (6), wobei zumindest ein Teil des Ladebodens über das Verschlussglied (6) an dem Fahrzeug lösbar festlegbar ist,
wobei der Ladeboden in einem entriegelten Zustand des Verschlussgliedes (6) aus dem Fahrzeug entnehmbar ist, und
wobei der erste Abschnitt (1) und der zweite Abschnitt (2) in dem festgelegten Zustand in derselben Ebene angeordnet sind,
**dadurch gekennzeichnet,**
**dass** der erste Abschnitt des Ladebodens über das Verschlussglied verriegelbar ist.

2. Fahrzeug mit einem Ladeboden nach Anspruch 1, **dadurch gekennzeichnet, dass** jeweils ein Verschlussglied (6) an jeder Seite des Ladebodens vorgesehen ist.

3. Fahrzeug mit einem Ladeboden nach Anspruch 1, **dadurch gekennzeichnet, dass** der erste Abschnitt (1) in eine abgelegte Position verbringbar oder aus dieser Position entnehmbar ist, während zumindest der zweite Abschnitt (2) in einer umgeklappten Position auf dem ersten Abschnitt aufliegt.

4. Fahrzeug mit einem Ladeboden nach einem der vorhergehenden Ansprüche, **dadurch gekennzeichnet, dass** an dem zweiten Abschnitt (2) ein mit dem Verschlussglied (6) zusammenwirkendes Koppelglied (2a) angeordnet ist.

5. Fahrzeug mit einem Ladeboden nach einem der vorhergehenden Ansprüche, **dadurch gekennzeichnet, dass** das Verschlussglied (6) ein linear verschiebbares Riegelglied (7) umfasst.

6. Fahrzeug mit einem Ladeboden nach Anspruch 5, **dadurch gekennzeichnet, dass** das Riegelglied (7) einen Ansatz (7c) zum manuellen Verschieben des Riegelgliedes (7) durch eine Bedienperson aufweist.

7. Fahrzeug mit einem Ladeboden nach Anspruch 5 oder 6, **dadurch gekennzeichnet, dass** das Riegelglied (7) einen Halteabschnitt (7a) aufweist, der in dem festgelegten Zustand mit einem der Abschnitte (1) des Ladebodens kämmt.

8. Fahrzeug mit einem Ladeboden nach einem der Ansprüche 5 bis 7, **dadurch gekennzeichnet, dass** das Riegelglied (7) in zumindest einer Endposition mittels einer Rastkraft gehalten ist.

9. Fahrzeug mit einem Ladeboden nach einem der Ansprüche 5 bis 8, **dadurch gekennzeichnet, dass** das Riegelglied (7) in einer Richtung mittels einer Feder kraftbeaufschlagt ist.

10. Fahrzeug mit einem Ladeboden nach einem der Ansprüche 5 bis 9, **dadurch gekennzeichnet, dass** der Ladeboden auf zumindest einem karosseriefesten Rahmenteil (5) aufliegt, wobei das Riegelglied (7) in dem Rahmenteil (5) aufgenommen ist.

11. Fahrzeug mit einem Ladeboden nach einem der vorhergehenden Ansprüche, **dadurch gekennzeichnet, dass** der Ladeboden mittels nur einer Hand einer Bedienperson von dem festgelegten Zustand ausgehend entriegelbar und aus dem Fahrzeug entnehmbar ist.

## Claims

1. Vehicle having a loading floor, comprising a first loading floor section (1), and
at least one second loading floor section (2) which is arranged behind the first section (1) in the driving direction of the vehicle,
the second section (2) being connected to the first section (1) in an articulated manner and such that it can be pivoted about an axis, and
a closure member (6), it being possible for at least one part of the loading floor to be fixed releasably on the vehicle via the closure member (6),
it being possible for the loading floor to be removed from the vehicle in an unlocked state of the closure member (6), and
the first section (1) and the second section (2) being arranged in the same plane in the fixed state, **characterized**
**in that** the first section of the loading floor can be locked via the closure member.

2. Vehicle having a loading floor according to Claim 1, **characterized in that** in each case one closure member (6) is provided on each side of the loading floor.

3. Vehicle having a loading floor according to Claim 1, **characterized in that** the first section (1) can be moved into a stowed position or can be removed from the said position, whereas at least the second section (2) lies on the first section in a folded-over position.

4. Vehicle having a loading floor according to one of the preceding claims, **characterized in that** a coupling member (2a) which interacts with the closure member (6) is arranged on the second section (2).

5. Vehicle having a loading floor according to one of the preceding claims, **characterized in that** the closure member (6) comprises a linearly displaceable bolt member (7).

6. Vehicle having a loading floor according to Claim 5, **characterized in that** the bolt member (7) has a lug (7c) for the manual displacement of the bolt member (7) by way of an operator.

7. Vehicle having a loading floor according to Claim 5 or 6, **characterized in that** the bolt member (7) has a holding section (7a) which meshes with one of the sections (1) of the loading floor in the fixed state.

8. Vehicle having a loading floor according to one of Claims 5 to 7, **characterized in that** the bolt member (7) is held by means of a latching force in at least one end position.

9. Vehicle having a loading floor according to one of Claims 5 to 8, **characterized in that** the bolt member (7) is loaded with a force in one direction by means of a spring.

10. Vehicle having a loading floor according to one of Claims 5 to 9, **characterized in that** the loading floor lies on at least one frame part (5) which is fixed to the vehicle body, the bolt member (7) being received in the frame part (5).

11. Vehicle having a loading floor according to one of the preceding claims, **characterized in that** the loading floor can be unlocked, starting from the fixed position, by means of only one hand of an operator and can be removed from the vehicle.

## Revendications

1. Véhicule avec un plancher de chargement, comprenant
une première partie de plancher de chargement (1) et
au moins une deuxième partie de plancher de chargement (2) qui est disposée, dans la direction de conduite du véhicule, derrière la première partie (1),
la deuxième partie (2) étant reliée à la première partie (1) de manière articulée et de manière à pouvoir pivoter autour d'un axe, et
un organe de fermeture (6), au moins une partie du plancher de chargement pouvant être fixée de manière amovible au véhicule par le biais de l'organe de fermeture (6),
le plancher de chargement, dans un état déverrouillé de l'organe de fermeture (6), pouvant être enlevé du véhicule, et
la première partie (1) et la deuxième partie (2), dans l'état fixé, étant disposées dans le même plan,
**caractérisé en ce que**
la première partie du plancher de chargement peut être verrouillée par le biais de l'organe de fermeture.

2. Véhicule avec un plancher de chargement selon la revendication 1,
**caractérisé en ce qu'**un organe de fermeture (6) est à chaque fois prévu de chaque côté du plancher de chargement.

3. Véhicule avec un plancher de chargement selon la revendication 1, **caractérisé en ce que** la première partie (1) peut être amenée dans une position déposée ou peut être enlevée de cette position tandis qu'au moins la deuxième partie (2) repose sur la première partie dans une position rabattue.

4. Véhicule avec un plancher de chargement selon l'une quelconque des revendications précédentes, **caractérisé en ce qu'**un organe d'accouplement (2a) coopérant avec l'organe de fermeture (6) est disposé sur la deuxième partie (2).

5. Véhicule avec un plancher de chargement selon l'une quelconque des revendications précédentes, **caractérisé en ce que** l'organe de fermeture (6) comprend un organe de verrou déplaçable linéairement (7).

6. Véhicule avec un plancher de chargement selon la revendication 5, **caractérisé en ce que** l'organe de verrou (7) présente une pièce (7c) pour le déplacement manuel de l'organe de verrou (7) par un opérateur.

7. Véhicule avec un plancher de chargement selon la revendication 5 ou 6, **caractérisé en ce que** l'organe de verrou (7) présente une partie de retenue (7a) qui s'engrène avec l'une des parties (1) du plancher de chargement dans l'état fixé.

8. Véhicule avec un plancher de chargement selon l'une quelconque des revendications 5 à 7, **caractérisé en ce que** l'organe de verrou (7) est retenu dans au moins une position d'extrémité au moyen d'une force d'encliquetage.

9. Véhicule avec un plancher de chargement selon l'une quelconque des revendications 5 à 8, **caractérisé en ce que** l'organe de verrou (7) est sollicité dans une direction par une force au moyen d'un ressort.

10. Véhicule avec un plancher de chargement selon l'une quelconque des revendications 5 à 9, **caractérisé en ce que** le plancher de chargement repose sur au moins une partie de cadre (5) fixée à la carrosserie, l'organe de verrou (7) étant reçu dans la partie de cadre (5).

11. Véhicule avec un plancher de chargement selon l'une quelconque des revendications précédentes, **caractérisé en ce que** le plancher de chargement peut être déverrouillé d'une seule main par un opérateur hors de l'état fixé et peut être enlevé du véhicule.
